# EUROPÄISCHE PATENTSCHRIFT

(11) **EP 2 225 934 B1**
(45) Veröffentlichungstag und Bekanntmachung des Hinweises auf die Patenterteilung: **08.07.2015**
(21) Anmeldenummer: 09003090.9
(22) Anmeldetag: 04.03.2009
(51) Int. Cl.: A01J 25/00, A01J 25/11, A01J 25/12

(54) **Käseherstellungsverfahren und Käseherstellungsvorrichtung**
Cheese production device and method
Procédé de fabrication de fromage et dispositif de fabrication de fromage

(43) Veröffentlichungstag der Anmeldung: 08.09.2010
(73) Patentinhaber: Züger Frischkäse AG, 9245 Oberbüren (CH)
(72) Erfinder: Züger, Christof, 9246 Niederbüren (CH); Züger, Markus, 9245 Oberbüren (CH)
(74) Vertreter: Harmann, Bernd-Günther

(56) Entgegenhaltungen:
- EP-A- 1 205 105
- WO-A-87/00002
- DE-A1- 3 229 241
- DE-B- 1 129 757
- DE-U1-202006 006 969

## Beschreibung

Die Erfindung betrifft ein teil- oder vollautomatisches Käseherstellungsverfahren, insbesondere zum Herstellen von bei Erhitzung formstabilem, nicht schmelzendem und daher zum Braten und Grillen geeignetem Frischkäse, und eine ebensolche Käseherstellungsvorrichtung.

Seit hunderten von Jahren sind zahlreiche Verfahren zur Herstellung von Käse, beispielsweise Frischkäse, bekannt.

Um dabei einen - auch im Falle der Erhitzung - formstabilen, nur geringfügig schmelzenden und daher zum Braten und Grillen geeigneten Frischkäse, der auch als Paneer-Käse bezeichnet wird, zu erzeugen, ist nach dem Stand der Technik ein im Wesentlichen händisch durchzuführendes Verfahren bekannt. Dafür werden spezielle Behältnisse bzw. Topfformen, die z.B. aus hochwertigem Kunststoff bestehen und eine Perforation im Boden und den Seitenwänden aufweisen, verwendet.

Im Rahmen des bekannten händischen Verfahrens werden dabei die folgenden Schritte durchgeführt:
- Erzeugen einer Eingangsmasse z.B. durch Vorbehandeln von Milch mit Labersatzstoff und/oder Bakterienkulturen zur Koagulation der Milch, Erhitzen der Milch, insbesondere auf etwa zwischen 85°C und 92°C, und Ausfällen der Milch mit Säure und/oder Zitronendicksaft, sodass die Eingangsmasse im Wesentlichen durch ein Gemisch aus Molkeflüssigkeit und geronnener, granulatartiger Milch dargestellt wird,
- Befüllen der Behältnisse mit der Eingangsmasse, wobei die Seitenwände der Behältnisse eine bestimmte Bauhöhe nicht überschreiten dürfen aufgrund der Gefahr, dass bei einem der später vorgesehenen händischen Wendevorgängen der darin befindliche, noch nicht genügend formstabile Block auf einer Kante landet und dadurch unerwünscht deformiert wird,
- Abtropfenlassen der Molke durch die Perforation der Seitenwände des Behältnisses hindurch,
- Nachfüllen von Eingangsmasse nachdem ein entsprechender Teil der Molkeflüssigkeit abgetropft ist und somit weitere Eingangsmasse durch das Behältnis aufgenommen werden kann,
- Wiederholen des Abtropfenlassens und des Nachfüllens bis eine gewünschte Füllhöhe der im Behältnis befindlichen Masse erreicht wird und
- Abkühlen des Käseblocks, wofür ein mehrmaliges Wenden (d.h. "Auf-den-Kopf-Stellen") des Behältnisses erfolgt,
wobei hier - wie oben beschrieben - die Gefahr besteht, dass der Käsemasse-Block z.B. durch Verhaken oder durch Reibung an einer Behältnis-Seitenwand schräg aus dem Behältnis fällt und auf einer Kante landet.

Aufgrund dieser beim Wenden auftretenden Deformierungs-Gefahr werden die Seitenwände mit geringer Höhe gewählt, sodass die Fallhöhe des Käseblocks beim Wenden des Behältnisses gering ist, wodurch der Käseblock etwas kontrollierter aus dem Behältnis fallen kann. Diese geringe Seitenwandhöhe verhindert jedoch, dass die eigentlich pro Behältnis vorgesehene Eingangsmasse im Rahmen eines einzigen kontinuierlichen Füllvorgangs in das Behältnis eingefüllt werden kann. Durch das somit erforderliche mehrmalige Abwarten (bzw. Abtropfenlassen) und mehrmalige Nachfüllen von Eingangsmasse ist ein unerwünscht hoher Zeitaufwand notwendig.

Zusätzlich besteht beim mehrmaligen Nachfüllen die Gefahr, dass die exakt zu erreichende, vorgegebene Füllmenge und somit Endmenge an Käse pro Behälter variiert. Dies ist dadurch begründet, dass beim abhängig von der jeweiligen aktuellen Molke-Abtropfgeschwindigkeit erfolgenden, mehrmaligen Nachfüllen von Eingangsmasse ein standardisierter Abfüllvorgang mit einer exakt vorgegebenen Gesamtbefüllungsmenge pro Behältnis verunmöglicht ist, bzw. nur unter erheblichem Aufwand möglich ist.

Des Weiteren erweist sich auch das mehrmalige Wenden zur Kühlung der Käsemasse - das solange erfolgt, bis die Käsemasse letztendlich auf ein bestimmtes Mass geschrumpft ist - als aufwändig, wenig robust und fehleranfällig.

Zwar kann durch ein nach dem Stand der Technik bekanntes Befestigen von mehreren Behältnissen mittels eines grossen Rahmens (in dem z.B. zwei Reihen von jeweils vier Behältnissen fixiert werden können) der Produktionsvorgang - insbesondere die Wendevorgänge - etwas effizienter gestaltet werden. Die eigentlich wünschenswerte Produktionseffizienz kann jedoch bei den bekannten Frischkäseherstellungs-Verfahren nicht gewährleistet werden.

Eine Aufgabe der Erfindung ist daher das Bereitstellen eines teil- oder vollautomatischen Käseherstellungsverfahrens, insbesondere zum Herstellen von bei Erhitzung formstabilem, nicht schmelzendem und daher zum Braten und Grillen geeignetem Frischkäse, sowie einer ebensolchen teil- oder vollautomatischen Käseherstellungsvorrichtung.

Insbesondere soll dabei die Deformierungs-Gefahr durch unkontrolliertes Herausfallen des Käses aus dem Behältnis beim Wendevorgang verringert oder gar verhindert werden und dennoch ein Behältnis mit derart hohen Seitenwänden verwendbar sein, dass die pro Behältnis vorgesehenen Gesamt-Füllmengen der Eingangsmasse - auch bei Durchführung eines einzigen fortlaufenden Füllvorgangs - durch die Behältnisse gefasst werden können.

Diese Aufgabe wird durch die Verwirklichung der Merkmale der unabhängigen Ansprüche 1 und 13 gelöst. Merkmale, die die Erfindung in alternativer oder vorteilhafter Weise weiterbilden, sind den abhängigen Patentansprüchen zu entnehmen.

Für das erfindungsgemässe teil- oder vollautomatische Käseherstellungsverfahren ist ein Fliessband vorgesehen, das beispielsweise durch eine Antriebseinheit schrittweise in einem definierten Takt fortbewegt wird. An dem Fliessband sind Behältnisse angebracht, die jeweils in Fortbewegungsrichtung des Fliessbands definiert voneinander beabstandet angeordnet sind sowie jeweils einen Behältnis-Boden und Seitenwände aufweisen. Die Behältnis-Böden und die Seitenwände sind dabei jeweils flüssigkeitsdurchlässig ausgebildet, insbesondere mit einer Perforation versehen.

Im Speziellen können die Behältnisse in einer oder mehreren Reihen entlang der Fortbewegungsrichtung des Fliessbands sowie mit jeweils gleichem, in Fortbewegungsrichtung bemessenem Longitudinal-Abstand zueinander an dem Fliessband befestigt sein. Das Fliessband kann nun z.B. im Takt schrittweise jeweils genau um diesen Longitudinal-Abstand fortbewegt werden und während eines definierten Ruhe-Zeitfensters zwischen dem schrittweisen Fortbewegen jeweils stillstehen.

An jeweils unterschiedlichen Fliessbandstationen, die insbesondere in Fortbewegungsrichtung entlang des Fliessbandpfads nacheinander folgend angeordnet sind, erfolgen dabei die Schritte
- Befüllen der Behältnisse mit einer Eingangsmasse, die zumindest teilweise aus einer vorbehandelten und vorgängig erhitzten Milchmasse besteht, wobei eine präzise vorgegebene Füllmenge der Eingangsmasse pro Behältnis in einem einzigen fortlaufenden Befüllungsvorgang jeweils in die Behältnisse eingefüllt wird,
- zumindest teilweises Entmolken der in den Behältnissen befindlichen Eingangsmasse durch Abtropfenlassen von Molkeflüssigkeit durch die flüssigkeitsdurchlässigen Seitenwände bzw. Behältnis-Böden - insbesondere durch die Perforation - hindurch,
- Pressen der zumindest teilweise entmolkten Eingangsmasse, wonach eine - im Vergleich zur ursprünglich eingefüllten Eingangsmasse - homogenere Zwischenmasse in den Behältnissen verbleibt,
- Kühlen der sich in den Behältnissen befindlichen Zwischenmasse durch stellenweises Leiten des Fliessbands durch mindestens ein definiert temperiertes Kühlflüssigkeitsbad derart, dass die an dieser Fliessbandstation befindlichen Behältnisse zumindest teilweise in Kühlflüssigkeit eintauchen und anschliessend aus dem Kühlflüssigkeitsbad herausgeführt werden,
   wobei das Kühlen derart erfolgt, dass ein Zusammenschrumpfen und Formstabilisieren der Zwischenmasse bewirkt wird, sodass nach dem Kühlen die Zwischenmasse ohne seitlichem Druck auf die Seitenwände, insbesondere unter Ablösung von den Seitenwänden, auf dem Behältnis-Boden aufliegt,
- Wenden der Behältnisse durch Leiten des Fliessbands um eine Wende mit horizontal ausgerichteter Wendeachse, sodass die als Käseblock ausgebildete Zwischenmasse aufgrund der Schwerkraft aus den Behältnissen fallen kann.

Gemäss der Erfindung können die Seitenwände der Behältnisse nun derart hoch gewählt werden, dass die gesamte vorgegebene Füllmenge der Eingangsmasse pro Behältnis in einem einzigen Füllvorgang durch das jeweilige Behältnis gefasst werden kann. Dadurch kann der Füllvorgang nun in einem einzigen, kontinuierlichen Verfahrenschritt ablaufen, sodass unter geringem Aufwand ein exaktes Bemessen der Eingangsmasse-Einfüllmenge ermöglicht wird. Dadurch kann der Befüllungsvorgang unter erheblich geringerem Zeitaufwand erfolgen.

Trotz der Wahl von Behältnissen mit vergleichsweise hohen Seitenwänden besteht jedoch erfindungsgemäss keine erhöhte Deformations-Gefahr beim Wendevorgang (d.h. beim Herausfallen der Käseblöcke aus den Behältnissen), da die Käseblöcke nach dem aktiven, kontrollierten Kühlvorgang auf ein bestimmtes Mass geschrumpft sind und somit keinen seitlichen Druck auf die Seitenwände des Behältnisses mehr ausüben. Insbesondere liegt die geschrumpfte Zwischenmasse nach dem Kühlen seitenwandberührungsfrei, d.h. unter Ablösung von den Seitenwänden, auf dem Behältnis-Boden auf.

Somit kann gemäss der Erfindung die Deformierungs-Gefahr durch unkontrolliertes Herausfallen des Käses aus dem Behältnis beim Wendevorgang verringert oder gar verhindert werden und dennoch ein Behältnis mit derart hohen Seitenwänden verwendet werden, dass die pro Behältnis vorgesehenen Gesamt-Füllmengen der Eingangsmasse - auch bei Durchführung eines einzigen fortlaufenden Füllvorgangs - durch die Behältnisse gefasst werden können. Dadurch kann das Käseherstellungsverfahren erheblich weniger aufwändig, insbesondere hinsichtlich händisch durchzuführender Vorgänge, und vergleichsweise weniger fehleranfällig gestaltet werden, sodass eine höhere Produktionseffizienz erzielbar ist.

Nach Herausfallen des Käseblocks aus dem Behältnis - bzw. an der für das Herausfallen vorgesehenen Wendeposition - kann der Käseblock aufgefangen und anschliessend weiterbehandelt werden, wobei ein weiteres Abkühlen in einem fliessband-externen Kühlflüssigkeitsbad sowie ein Zuschneiden des Käseblocks in abpackbare Portionen erfolgen kann.

Das erfindungsgemässe teil- oder vollautomatische Käseherstellungsverfahren ist dabei insbesondere ausgelegt zum Herstellen von bei Erhitzung formstabilem, nicht schmelzendem und daher zum Braten und Grillen geeignetem Frischkäse.

Jedoch kann das Verfahren gemäss der Erfindung auch zur Herstellung von andersartigem Käse, insbesondere von andersartigem Frischkäse, ausgelegt werden.

Verschiedene Weisen zum Erzeugen der Eingangsmasse sind dem Fachmann dabei bekannt und können je nach gewünschter, zu erzeugender Käsesorte entsprechend angepasst werden.

Beispielsweise kann die Eingangsmasse erzeugt werden durch
- Vorbehandeln von Milch mit Labersatzstoff und/oder Bakterienkulturen zur Koagulation der Milch,
- Erhitzen der Milch, insbesondere auf etwa zwischen 85°C und 92°C, und
- Ausfällen der Milch mit Säure und/oder Zitronendicksaft.

Ebenso können geeignete Kühlzeiten im Kühlbad, geeignete Kühlflüssigkeiten sowie ein geeigneter Druck für den Pressvorgang durch den Fachmann - je nach gewünschtem Endprodukt - angepasst und entsprechend gewählt werden.

Insbesondere kann dabei zur Kühlung das Fliessband auch durch zwei in Fortbewegungsrichtung sequenziell nacheinander folgende, unterschiedlich temperierte Kühlflüssigkeitsbäder geführt werden. Je nach gewählter Temperatur der in den Bädern eingelassenen Kühlflüssigkeiten kann die Käse-Zwischenmasse beispielsweise für etwa fünfzehn Minuten in jedem der Kühlflüssigkeitsbäder verweilen. Dazu können sich die Flüssigkeitsbäder derart weit in Fortbewegungsrichtung entlang des Fliessbands erstrecken, dass sich unter Berücksichtigung der Taktung sowie der Abstände der Behältnisse die gewünschte Verbleib-Zeit im jeweiligen Kühlbad ergibt.

Als Kühlflüssigkeit kann beispielsweise mit Salz und Säure modifiziertes Wasser verwendet werden, sodass ein Ausgleichen der osmotischen Verhältnisse zwischen der Kühlflüssigkeit und der Zwischenmasse erfolgt.

Des Weiteren betrifft die Erfindung eine teil- oder vollautomatische Käseherstellungsvorrichtung, die zur stationsweisen Durchführung zumindest eines Teils der Schritte des oben beschriebenen Verfahrens ausgebildet ist.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig.1: ein Ausführungsbeispiel für die erfindungsgemässe Käseherstellungsvorrichtung;
- Fig.2: ein Ausführungsbeispiel für eine Wendestation, das anhand zweier Darstellungen näher erläutert wird;
- Fig.3: eine Draufsicht auf ein erstes Ausführungsbeispiel für das Fliessband;
- Fig.4: eine Draufsicht auf ein zweites Ausführungsbeispiel für das Fliessband; und
- Fig.5: eine detaillierte Darstellung eines Ausführungsbeispiels für das Fliessband.

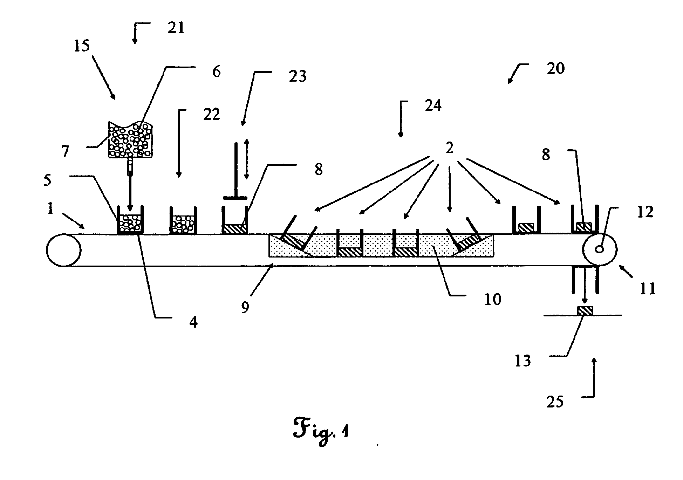

Figur 1 zeigt ein Ausführungsbeispiel für eine erfindungsgemässe Käseherstellungsvorrichtung 20, die insbesondere zur Herstellung von bei Erhitzung formstabilem, nicht schmelzendem und daher zum Braten und Grillen geeignetem Frischkäse ausgebildet ist.

Die Vorrichtung weist ein schrittweise in definiertem Takt fortbewegbares Fliessband 1 auf, an dem Behältnisse 2 angebracht sind, die jeweils einen Behältnis-Boden 4 und Seitenwände 5 aufweisen sowie in Fortbewegungsrichtung des Fliessbands 1 definiert voneinander beabstandet angeordnet sind.

Die Böden 4 und Seitenwände 5 der Behältnisse 2 sind dabei jeweils flüssigkeitsdurchlässig ausgebildet, insbesondere jeweils mit einer Perforation versehen.

Die Käseherstellungsvorrichtung 20 weist des Weiteren, im Speziellen in Fortbewegungsrichtung aufeinander folgend, die folgenden Fliessbandstationen auf:
- eine Befüllstation 21 zur Befüllung der Behältnisse 2 mit einer Eingangsmasse 6, die zumindest teilweise aus einer vorbehandelten und vorgängig erhitzten Milchmasse besteht, wobei eine präzise vorgegebene Füllmenge der Eingangsmasse 6 pro Behältnis 2 in einem einzigen fortlaufenden Befüllungsvorgang jeweils in die Behältnisse 2 einfüllbar ist,
   wofür die Behältnisse 2 derart hohe Seitenwände 5 aufweisen, dass die gesamte vorgegebene Füllmenge der Eingangsmasse 6 pro Behältnis 2 in einem einzigen Füllvorgang durch das jeweilige Behältnis 2 fassbar ist,
- eine Entmolkestation 22 zur zumindest teilweisen Entmolkung der in den Behältnissen 6 befindlichen Eingangsmasse 6 durch Abtropfenlassen von Molkeflüssigkeit 7 durch die flüssigkeitsdurchlässigen Seitenwände 5 bzw. Behältnis-Böden 4, insbesondere durch die Perforation, hindurch,
- eine Pressstation 23 zum Zusammenpressen der zumindest teilweise entmolkten Eingangsmasse 6, wodurch eine im Vergleich zur ursprünglich eingefüllten Eingangsmasse 6 homogenere Zwischenmasse 8 in den Behältnissen 2 erzeugbar ist,
- eine Kühlstation 24 zur Kühlung der sich in den Behältnissen 2 befindlichen Zwischenmasse 8 durch stellenweise Führung des Fliessbands 1 durch mindestens ein definiert temperiertes Kühlflüssigkeitsbad 9 derart, dass die sich an der Kühlstation befindenden Behältnisse 2 zumindest teilweise in Kühlflüssigkeit 10 eintauchen und anschliessend aus dem Kühlflüssigkeitsbad 9 herausgeführt werden,
   wobei das Kühlen derart erfolgt, dass ein Zusammenschrumpfen und Formstabilisieren der Zwischenmasse 8 bewirkt wird, sodass nach dem Kühlen die Zwischenmasse 8 ohne seitlichem Druck auf die Seitenwände 5, insbesondere seitenwandberührungsfrei, auf dem Behältnis-Boden 4 aufliegt,
- eine Wendestation 25 zum Wenden der Behältnisse 2 durch Führung des Fliessbands 1 um eine Wende 11 mit horizontal ausgerichteter Wendeachse 12, sodass die als Käseblock 13 ausgebildete Zwischenmasse 8 aufgrund der Schwerkraft aus den Behältnissen 2 fallen kann.

Insbesondere ist dabei eine weitere - aus Einfachheitsgründen hier nicht dargestellte - Vorreinigungsstation vorgesehen, die zur Vorreinigung der Behältnisse 2 sowie des Fliessbands 1 durch Besprühen derselben mit Sterilwasser nach oder bei dem Schritt des Entmolkens, jedoch vor dem Schritt des Kühlens, ausgebildet ist, sodass eine Verunreinigung der Kühlflüssigkeit 10 durch abgetropfte, am Fliessband 1 und/oder den Behältnissen 2 anhaftende Molkeflüssigkeit 7 vermindert wird.

Zudem können eine oder mehrere - aus Einfachheitsgründen in Figur 1 ebenso nicht dargestellte - weitere Fliessbandstationen vorgesehen sein, zum gründlichen Reinigen des insbesondere aus Kunststoff ausgebildeten Fliessbands 1 sowie der insbesondere aus Kunststoff ausgebildeten Behältnisse 2 zwischen dem Schritt des Wendens und dem Schritt des Befüllens der Behältnisse 2. Beispielsweise kann die Station dafür spezielle Reinigungsdüsen (insbesondere CIP-Düsen) aufweisen.

An der Befüllstation 21 kann z.B. ein Befüllungsbehälter 15 mit einer grossen Menge an Eingangsmasse 6 vorgesehen sein, aus dem die Eingangsmasse 6 heraus - in den präzise vorgegebenen Füllmengen - in die Behältnisse abgefüllt wird.

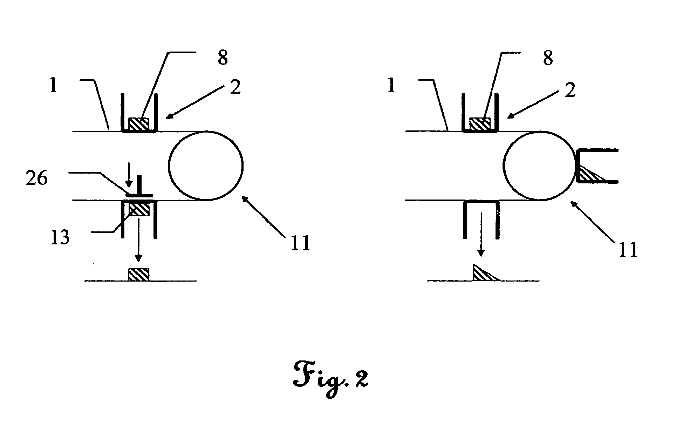

Wie in der linken Darstellung in Figur 2 ersichtlich ist, können der Longitudinal-Abstand der Behältnisse 2 und die Wende 11 des Fliessbands, insbesondere ein Radius der Wende 11, vorteilhaft derart aufeinander abgestimmt sein, dass jenes unmittelbar vor der Wende befindliche Behältnis in einem einzigen Fortbewegungsschritt des Fliessbands 1 die gesamte Wende 11 durchläuft und nach dem Fortbewegungsschritt eine Flächennormale des Behältnis-Bodens im Wesentlichen vertikal ausgerichtet ist.

Dabei wird eine Abweichung von etwa 15°, insbesondere etwa 10°, im Speziellen etwa 5°, aus der Vertikalen ebenso als im Wesentlich vertikal ausgerichtet verstanden.

Sind hingegen der Longitudinal-Abstand der Behältnisse 2 und die Wende 11 des Fliessbands nicht derart aufeinander abgestimmt, dass das Behältnis 2 in einem einzigen Fortbewegungsschritt des Fliessbands 1 die gesamte Wende 11 durchläuft, so kommt das Behältnis in einer Schräglage zum stehen und verweilt in dieser Schräglage während eines Ruhe-Zeitfensters des Fliessbands 1. Dieser Fall ist rechtsseitig in Figur 2 dargestellt, wobei auch die Gefahr ersichtlich wird, dass sich der Käseblock aufgrund der über ein gesamtes Ruhe-Zeitfenster andauernden Schräglage unerwünscht verformt.

Wie in linksseitiger Figur 2 ausserdem gezeigt ist, kann in Fortbewegungsrichtung 3 nach der Wende 11 ein Impulsgeber 26 zur derartigen mittel- und/oder unmittelbaren Übertragung eines Impulses auf den Käseblock 13 angeordnet sein, dass der Käseblock 13 auch im Fall eines Anhaftens am Behältnis-Boden aus dem sich nach der Wende 11 befindenden Behältnis 2 fällt.

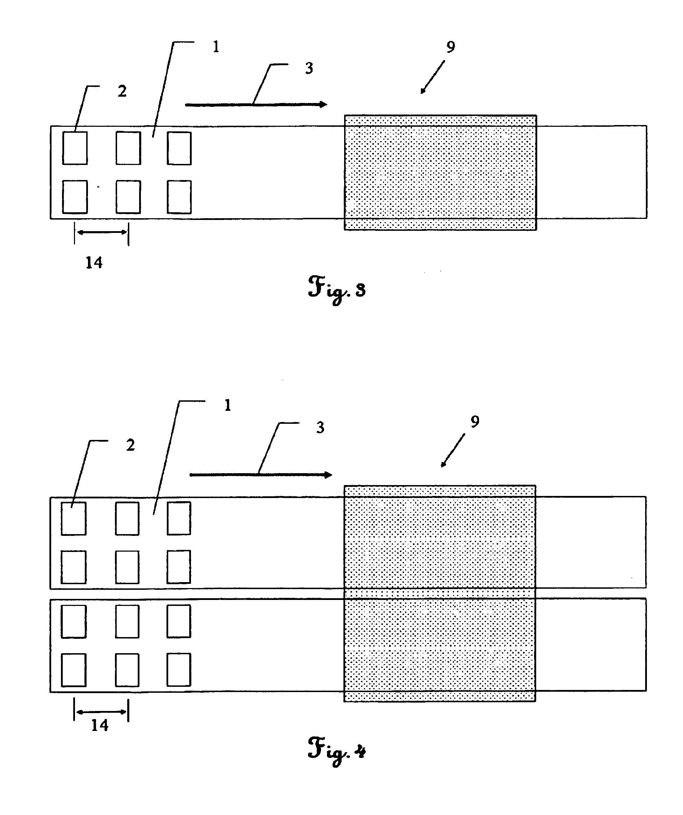

Figur 3 zeigt eine Draufsicht auf ein erstes Ausführungsbeispiel für das Fliessband. Beispielhaft sind dabei die Behältnisse 2 in zwei Reihen entlang der Fortbewegungsrichtung 3 des Fliessbands 1 und jeweils mit gleichem, in Fortbewegungsrichtung bemessenem Longitudinal-Abstand 14 zueinander an dem Fliessband 1 befestigt.

Das Fliessband 1 wird nun im Takt schrittweise jeweils genau um den Longitudinal-Abstand 14 fortbewegt und steht somit während eines definierten Ruhe-Zeitfensters zwischen dem schrittweisen Fortbewegen jeweils still.

Figur 4 zeigt eine Draufsicht auf ein zweites Ausführungsbeispiel für das Fliessband.

Beispielhaft sind die Behältnisse dabei auf zwei getrennt voneinander fortbewegbaren Fliessbändern jeweils zweireihig angeordnet.

Insbesondere können dabei die Taktungen des ersten und des zweiten Fliessbands asynchron gewählt werden. Dadurch kann beispielsweise vereinfacht auch bei Wahl eines länger andauernden Ruhe-Zeitfensters ein kontinuierlicher Auslauf aus dem Befüllungsbehälter heraus ermöglicht werden.

Zudem kann sich das Kühlflüssigkeitsbad 9 auch über beide Fliessbänder erstrecken.

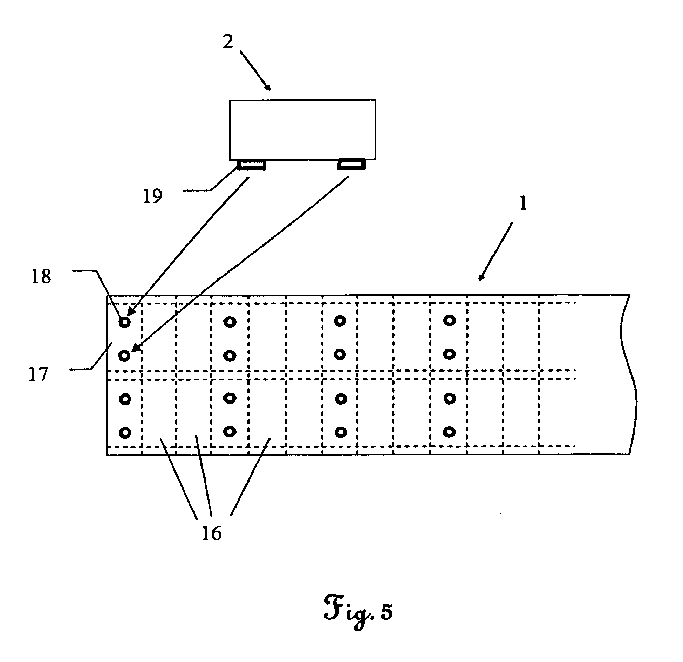

Wie in Figur 5 dargestellt kann das Fliessband 1 modular aus einer Vielzahl von Fliessband-Gliedern 16 ausgebildet sein, wobei die Glieder jeweils gegeneinander kippbar miteinander verbunden sein können.

Die Behältnisse 2 können in einer oder mehreren Reihen entlang der Fortbewegungsrichtung des Fliessbands 1 und jeweils mit gleichen, in Fortbewegungsrichtung bemessenen Longitudinal-Abständen 14 zueinander an speziell zur Befestigung der Behältnisse 2 vorgesehenen Spezial-Fliessband-Gliedern 17 des Fliessbands 1 angeordnet sein.

Insbesondere können die Spezial-Fliessband-Glieder 17 dabei jeweils
- fix mit den Behältnissen 2 verbunden - im Speziellen angeklebt - sein,
- einstückig mit den Behältnissen (2) ausgebildet sein oder
- lösbar mit den Behältnissen 2 verbunden werden - im Speziellen mittels einer Einrast-Steckverbindung 18,19.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

## Patentansprüche

1. Teil- oder vollautomatisches Käseherstellungsverfahren, insbesondere zum Herstellen von bei Erhitzung formstabilem, nicht schmelzendem und daher zum Braten und Grillen geeignetem Frischkäse, mit einem schrittweise in definiertem Takt fortbewegten Fliessband (1), an dem Behältnisse (2) angebracht sind, die jeweils
• einen Behältnis-Boden (4) und Seitenwände (5) aufweisen, wobei Behältnis-Boden (4) und Seitenwände (5) jeweils flüssigkeitsdurchlässig ausgebildet sind, insbesondere jeweils mit einer Perforation versehen sind, und
• in Fortbewegungsrichtung (3) des Fliessbands (1) definiert voneinander beabstandet angeordnet sind,
mit den jeweils an unterschiedlichen Fliessbandstationen erfolgenden Schritten
• Befüllen der Behältnisse (2) mit einer Eingangsmasse (6), die zumindest teilweise aus einer vorbehandelten und vorgängig erhitzten Milchmasse besteht, wobei eine präzise vorgegebene Füllmenge der Eingangsmasse (6) pro Behältnis (2) in einem einzigen fortlaufenden Befüllungsvorgang jeweils in die Behältnisse (2) eingefüllt wird,
• zumindest teilweises Entmolken der in den Behältnissen (2) befindlichen Eingangsmasse (6) durch Abtropfenlassen von Molkeflüssigkeit (7) durch die flüssigkeitsdurchlässigen Seitenwände (5) bzw. Behältnis-Böden (4) hindurch,
• Pressen der zumindest teilweise entmolkten Eingangsmasse (6), wonach eine im Vergleich zur ursprünglich eingefüllten Eingangsmasse (6) homogenere Zwischenmasse (8) in den Behältnissen (2) verbleibt,
• Kühlen der sich in den Behältnissen (2) befindlichen Zwischenmasse (8) durch stellenweises Leiten des Fliessbands (1) durch mindestens ein definiert temperiertes Kühlflüssigkeitsbad (9) derart, dass die sich an dieser Fliessbandstation befindenden Behältnisse (2) zumindest teilweise in Kühlflüssigkeit (10) eintauchen und anschliessend aus dem Kühlflüssigkeitsbad (9) herausgeführt werden, wobei das Kühlen derart erfolgt, dass ein Zusammenschrumpfen und Formstabilisieren der Zwischenmasse (8) bewirkt wird, sodass nach dem Kühlen die Zwischenmasse (8) ohne seitlichem Druck auf die Seitenwände (5), insbesondere unter Ablösung von den Seitenwänden (5), auf dem Behältnis-Boden (4) aufliegt,
• Wenden der Behältnisse (2) durch Leiten des Fliessbands (1) um eine Wende (11) mit horizontal ausgerichteter Wendeachse (12), sodass die als Käseblock (13) ausgebildete Zwischenmasse (8) aufgrund der Schwerkraft aus den Behältnissen (2) fallen kann.

2. Käseherstellungsverfahren nach Anspruch 1,
**dadurch gekennzeichnet, dass**
der Käseblock (13) nach Herausfallen aus dem Behältnis (2) aufgefangen und weiterbehandelt wird, wobei ein weiteres Abkühlen in einem fliessbandexternen Kühlflüssigkeitsbad sowie ein Zuschneiden des Käseblocks (13) erfolgen.

3. Käseherstellungsverfahren nach Anspruch 1 oder 2,
**dadurch gekennzeichnet, dass**
die Eingangsmasse (6) erzeugt wird durch
• Vorbehandeln von Milch mit Labersatzstoff und/oder Bakterienkulturen zur Koagulation der Milch,
• Erhitzen der Milch, insbesondere auf etwa zwischen 85°C und 92°C, und
• Ausfällen der Milch mit Säure und/oder Zitronendicksaft.

4. Käseherstellungsverfahren nach einem der vorangehenden Ansprüche,
**dadurch gekennzeichnet, dass**
• die Behältnisse (2)
□ in einer oder mehreren Reihen entlang der Fortbewegungsrichtung (3) des Fliessbands (1) und
□ jeweils mit gleichem, in Fortbewegungsrichtung bemessenem Longitudinal-Abstand (14) zueinander an dem Fliessband (1) befestigt sind und
• das Fliessband (1) im Takt schrittweise jeweils genau um den Longitudinal-Abstand (14) fortbewegt wird und während eines definierten Ruhe-Zeitfensters zwischen dem schrittweisen Fortbewegen jeweils stillsteht.

5. Käseherstellungsverfahren nach Anspruch 4,
**dadurch gekennzeichnet, dass**
• der Longitudinal-Abstand (14) und die Wende (11) des Fliessbands (1), insbesondere ein Radius der Wende (11), derart aufeinander abgestimmt sind, dass jenes sich unmittelbar vor der Wende (11) befindende Behältnis (2) in einem einzigen Fortbewegungsschritt des Fliessbands (1) die gesamte Wende (11) durchläuft, sodass nach dem Fortbewegungsschritt eine Flächennormale des Behältnis-Bodens (4) des sich unmittelbar nach der Wende (11) befindenden Behältnisses (2) im Wesentlichen vertikal ausgerichtet ist.

6. Käseherstellungsverfahren nach einem der vorangehenden Ansprüche,
**dadurch gekennzeichnet, dass**
an einer oder mehreren Fliessbandstationen zwischen dem Schritt des Wendens und dem Schritt des Befüllens der Behältnisse (2) das insbesondere aus Kunststoff ausgebildete Fliessband (1) und die insbesondere aus Kunststoff ausgebildeten Behältnisse (2) gereinigt werden.

7. Käseherstellungsverfahren nach einem der vorangehenden Ansprüche,
**dadurch gekennzeichnet, dass**
nach dem Wenden der Behältnisse (2) ein mittel- und/oder unmittelbares Impulsgeben auf den Käseblock (13) derart erfolgt, dass der Käseblock (13) selbst im Fall eines Anhaftens am Behältnis-Boden (4) aus dem sich nach der Wende befindenden Behältnis (2) fällt.

8. Käseherstellungsverfahren nach einem der vorangehenden Ansprüche,
**dadurch gekennzeichnet, dass**
die Eingangsmasse (6) aus einem Befüllungsbehälter (15) heraus in den präzise vorgegebenen Füllmengen in die Behältnisse (2) abgefüllt wird.

9. Käseherstellungsverfahren nach einem der vorangehenden Ansprüche,
**dadurch gekennzeichnet, dass**
das Pressen in mehreren Intervallen, insbesondere in etwa zehn Intervallen mit jeweils einer Dauer von etwa einer Minute und jeweils dazwischen liegenden Presspausen, erfolgt.

10. Käseherstellungsverfahren nach einem der vorangehenden Ansprüche,
**dadurch gekennzeichnet, dass**
an einer Fliessbandstation nach oder bei dem Schritt des Entmolkens, jedoch vor dem Schritt des Kühlens, die Behältnisse (2) sowie das Fliessband (1) durch Besprühen derselben mit Sterilwasser vorgereinigt werden, sodass eine Verunreinigung der Kühlflüssigkeit (10) durch abgetropfte, am Fliessband (1) und/oder den Behältnissen (2) anhaftende Molkeflüssigkeit (7) vermindert wird.

11. Käseherstellungsverfahren nach einem der vorangehenden Ansprüche,
**dadurch gekennzeichnet, dass**
das Kühlen durch stellenweises Leiten des Fliessbands (1) durch zwei in Fortbewegungsrichtung (3) sequenziell nacheinander folgende, unterschiedlich temperierte Kühlflüssigkeitsbäder (9,9') erfolgt, insbesondere wobei die Zwischenmasse (8) jeweils für etwa fünfzehn Minuten in jedem der Kühlflüssigkeitsbäder (9,9') verweilt.

12. Käseherstellungsverfahren nach einem der vorangehenden Ansprüche,
**dadurch gekennzeichnet, dass**
mit Salz und Säure modifiziertes Wasser als die Kühlflüssigkeit (10) verwendet wird und ein Ausgleichen der osmotischen Verhältnisse zwischen der Kühlflüssigkeit (10) und der Zwischenmasse (8) erfolgt.

13. Teil- oder vollautomatische Käseherstellungsvorrichtung (20), insbesondere zur Herstellung von bei Erhitzung formstabilem, nicht schmelzendem und daher zum Braten und Grillen geeignetem Frischkäse,
mit einem schrittweise in definiertem Takt fortbewegbaren Fliessband (1), an dem Behältnisse (2) angebracht sind, die jeweils
• einen Behältnis-Boden (4) und Seitenwände (5) aufweisen, wobei Behältnis-Boden (4) und Seitenwände (5) jeweils flüssigkeitsdurchlässig ausgebildet sind, insbesondere jeweils mit einer Perforation versehen sind, und
• in Fortbewegungsrichtung (3) des Fliessbands (1) definiert voneinander beabstandet angeordnet sind,
wobei die Käseherstellungsvorrichtung (20), insbesondere in Fortbewegungsrichtung (3) aufeinander folgend, die folgenden Fliessbandstationen aufweist:
• eine Befüllstation (21) zur Befüllung der Behältnisse (2) mit einer Eingangsmasse (6), die zumindest teilweise aus einer vorbehandelten und vorgängig erhitzten Milchmasse besteht, wobei eine präzise vorgegebene Füllmenge der Eingangsmasse (6) pro Behältnis (2) in einem einzigen fortlaufenden Befüllungsvorgang jeweils in die Behältnisse (2) einfüllbar ist,
wofür die Behältnisse (2) derart hohe Seitenwände (5) aufweisen, dass die gesamte vorgegebene Füllmenge der Eingangsmasse (6) pro Behältnis (2) in einem einzigen Füllvorgang durch das jeweilige Behältnis (2) fassbar ist,
• eine Entmolkestation (22) zur zumindest teilweisen Entmolkung der in den Behältnissen (2) befindlichen Eingangsmasse (6) durch Abtropfenlassen von Molkeflüssigkeit (7) durch die flüssigkeitsdurchlässigen Seitenwände (5) bzw. Behältnis-Böden (4), insbesondere durch die Perforation, hindurch,
• eine Pressstation (23) zum Zusammenpressen der zumindest teilweise entmolkten Eingangsmasse (6), wodurch eine im Vergleich zur ursprünglich eingefüllten Eingangsmasse (6) homogenere Zwischenmasse (8) in den Behältnissen (2) erzeugbar ist,
• eine Kühlstation (24) zur Kühlung der sich in den Behältnissen (2) befindlichen Zwischenmasse (8) durch stellenweise Führung des Fliessbands (1) durch mindestens ein definiert temperiertes Kühlflüssigkeitsbad (9) derart, dass die sich an der Kühlstation befindenden Behältnisse (2) zumindest teilweise in Kühlflüssigkeit (10) eintauchen und anschliessend aus dem Kühlflüssigkeitsbad (9) herausgeführt werden,
wobei das Kühlen derart erfolgt, dass ein Zusammenschrumpfen und Formstabilisieren der Zwischenmasse (8) bewirkt wird, sodass nach dem Kühlen die Zwischenmasse (8) ohne seitlichem Druck auf die Seitenwände (5), insbesondere seitenwandberührungsfrei, auf dem Behältnis-Boden (4) aufliegt, und
• eine Wendestation (25) zum Wenden der Behältnisse (2) durch Führung des Fliessbands (1) um eine Wende (11) mit horizontal ausgerichteter Wendeachse (12), sodass die als Käseblock (13) ausgebildete Zwischenmasse (8) aufgrund der Schwerkraft aus den Behältnissen (2) fallen kann.

14. Käseherstellungsvorrichtung (20) nach Anspruch 13, **dadurch gekennzeichnet, dass**
• das Fliessband (1) modular aus einer Vielzahl von Fliessband-Gliedern (16) ausgebildet ist, die jeweils gegeneinander kippbar miteinander verbunden sind, und
• die Behältnisse (2)
□ in einer oder mehreren Reihen entlang der Fortbewegungsrichtung (3) des Fliessbands (1) und
□ jeweils mit gleichem, in Fortbewegungsrichtung bemessenem Longitudinal-Abstand (14) zueinander an zur Befestigung der Behältnisse (2) vorgesehenen Spezial-Fliessband-Gliedern (17) des Fliessbands (1) angeordnet sind,
• insbesondere wobei die Spezial-Fliessband-Glieder (17) jeweils
□ fix mit den Behältnissen (2) verbunden - im Speziellen angeklebt - sind,
□ einstückig mit den Behältnissen (2) ausgebildet sind oder
□ lösbar mit den Behältnissen (2) verbunden werden können - im Speziellen mittels einer Einrast-Steckverbindung (18,19).

15. Käseherstellungsvorrichtung (20) nach Anspruch 13 oder 14,
**gekennzeichnet durch**
einen in Fortbewegungsrichtung (3) nach der Wende (11) angeordneten Impulsgeber (26) zur derartigen mittel- und/oder unmittelbaren Übertragung eines Impulses auf den Käseblock (13), dass der Käseblock (13) auch im Fall eines Anhaftens am Behältnis-Boden (4) aus dem sich nach der Wende (11) befindenden Behältnis (2) fällt.

## Claims

1. Partly or fully automatic cheese production method, in particular for producing cream cheese which, when heated, is dimensionally stable, does not melt and is therefore suitable for frying and grilling, having a conveyor belt (1) which is moved onward step-by-step at a defined cycle rate and to which there are attached containers (2), which each
• have a container base (4) and side walls (5), container base (4) and side walls (5) in each case being formed so as to be liquid-permeable, in particular each being provided with a perforation, and
• are arranged spaced apart from one another in a defined manner in the onward movement direction (3) of the conveyor belt (1),
comprising the steps, respectively carried out at different conveyor belt stations, of
• filling the containers (2) with an initial mass (6), which consists at least partly of a pre-treated and previously heated milk mass, a precisely defined filling quantity of the initial mass (6) per container (2) being respectively put into the containers (2) in a single continuous filling operation,
• at least partly draining the initial mass (6) located in the containers (2) by allowing whey liquid (7) to drip through the liquid-permeable side walls (5) and container bases (4),
• pressing the at least partly drained initial mass (6), after which an intermediate mass (8) that is more homogenous as compared with the initial mass (6) initially put in remains in the containers (2),
• cooling the intermediate mass (8) located in the containers (2) by leading the conveyor belt (1) at some points through at least one cooling liquid bath (9) of which the temperature is controlled in a defined manner, in such a way that the containers (2) located in this conveyor belt station dip at least partly into cooling liquid (10) and are then guided out of the cooling liquid bath (9), the cooling being carried out in such a way that contraction and dimensional stabilization of the intermediate mass (8) is effected, so that, after the cooling, the intermediate mass (8) rests on the container base (4) without any lateral pressure on the side walls (5), in particular with detachment from the side walls (5),
• turning the containers (2) by leading the conveyor belt (1) around a turning point (11) with horizontally aligned turning point axis (12), so that the intermediate mass (8), formed as a cheese block (13), can fall out of the containers (2) on account of the force of gravity.

2. Cheese production method according to Claim 1,
**characterized in that**
after falling out of the container (2), the cheese block (13) is caught and treated further, further cooling in a cooling liquid bath external to the conveyor belt and trimming of the cheese block (13) being carried out.

3. Cheese production method according to Claim 1 or 2,
**characterized in that**
the initial mass (6) is produced by
• pre-treating milk with rennet substitute and/or bacterial cultures for the coagulation of milk,
• heating the milk, in particular to approximately between 85° C and 92°C, and
• precipitating the milk with acid and/or thick lemon juice.

4. Cheese production method according to any one of the preceding claims,
**characterized in that**
• the containers (2) are fixed to the conveyor belt (1)
○ in one or more rows along the onward movement direction (3) of the conveyor belt (1) and
○ each with the same longitudinal spacing (14) from one another, measured in the onward movement direction, and
• the conveyor belt (1) is moved onward step by step at the cycle rate in each case exactly by the longitudinal spacing (14) and in each case stops during a defined resting time window between the step by step onward movements.

5. Cheese production method according to Claim 4,
**characterized in that**
• the longitudinal spacing (14) and the turning point (11) of the conveyor belt (1), in particular a radius of the turning point (11), are matched to each other in such a way that container (2) located immediately before the turning point (11) runs through the whole of the turning point (11) in a single onward movement step of the conveyor belt (1), so that, after the onward movement step, a surface normal to the container base (4) of the container (2) located immediately after the turning point (11) is aligned substantially vertically.

6. Cheese production method according to any one of the preceding claims,
**characterized in that**
in one or more conveyor belt stations between the step of turning and the step of filling the containers (2), the conveyor belt (1), in particular formed of plastic, and the containers (2), in particular formed of plastic, are cleaned.

7. Cheese production method according to any one of the preceding claims,
**characterized in that**
following the turning of the containers (2), an impulse is transmitted indirectly and/or directly to the cheese block (13) in such a way that the cheese block (13) falls out of the container (2) located after the turning point, even in the event of adhering to the container base (4).

8. Cheese production method according to any one of the preceding claims,
**characterized in that**
the initial mass (6) is put into the containers (2) from a filling container (15) in the precisely predefined filling quantities.

9. Cheese production method according to any one of the preceding claims,
**characterized in that**
the pressing is carried out in a plurality of intervals, in particular in approximately ten intervals each having a duration of about one minute, and pressing pauses respectively in between.

10. Cheese production method according to any one of the preceding claims,
**characterized in that**
in a conveyor belt station after or during the draining step but before the cooling step, the containers (2) and the conveyor belt (1) are precleaned by spraying the same with sterile water, so that contamination of the cooling liquid (10) by drained whey liquid (7) adhering to the conveyor belt (1) and/or the containers (2) is reduced.

11. Cheese production method according to any one of the preceding claims,
**characterized in that**
the cooling is carried out by leading the conveyor belt (1) at some points through two cooling liquid baths (9, 9') following one another sequentially in the onward movement direction (3) and controlled to different temperatures, in particular the intermediate mass (8) respectively remaining in each of the cooling liquid baths (9, 9') for about fifteen minutes.

12. Cheese production method according to any one of the preceding claims,
**characterized in that**
water modified with salt and acid is used as the cooling liquid (10), and compensation of the osmotic relationships between the cooling liquid (10) and the intermediate mass (8) is carried out.

13. Partial or fully automatic cheese production device (20), in particular for the production of cream cheese which, when heated, is dimensionally stable, does not melt and is therefore suitable for frying and grilling, having a conveyor belt (1) which is moved onward step-by-step at a defined cycle rate and to which there are attached containers (2), which each
• have a container base (4) and side walls (5), container base (4) and side walls (5) in each case being formed so as to be liquid-permeable, in particular each being provided with a perforation, and
• are arranged spaced apart from one another in a defined manner in the onward movement direction (3) of the conveyor belt (1),
wherein the cheese production device (20) has the following conveyor belt stations, in particular following one another in the onward movement direction (3):
• a filling station (21) for filling the containers (2) with an initial mass (6), which consists at least partly of a pre-treated and previously heated milk mass, a precisely predefined filling quantity of the initial mass (6) per container (2) being respectively put into the containers (2) in a single continuous filling operation, for which purpose the containers (2) have such high side walls (5) that the entire predefined filling quantity of the initial mass (6) per container (2) can be held by the respective container (2) in a single filling operation,
• a draining station (22) for at least partly draining the initial mass (6) located in the containers (2) by allowing whey liquid (7) to drip through the liquid-permeable side walls (5) and container bases (4), in particular through the perforation,
• a pressing station (23) for pressing the at least partly drained initial mass (6) together, by which means an intermediate mass (8) that is more homogenous as compared with the initial mass (6) initially put in can be produced in the containers (2),
• a cooling station (24) for cooling the intermediate mass (8) located in the containers (2) by guiding the conveyor belt (1) at some points through at least one cooling liquid bath (9) of which the temperature is controlled in a defined manner, in such a way that the containers (2) located in the cooling station dip at least partly into cooling liquid (10) and are then guided out of the cooling liquid bath (9), the cooling being carried out in such a way that contraction and dimensional stabilization of the intermediate mass (8) is effected, so that, after the cooling, the intermediate mass (8) rests on the container base (4) without any lateral pressure on the side walls (5), in particular without touching the side walls, and
• a turning station (25) for turning the containers (2) by guiding the conveyor belt (1) around a turning point (11) with horizontally aligned turning point axis (12), so that the intermediate mass (8), formed as a cheese block (13), can fall out of the containers (2) on account of the force of gravity.

14. Cheese production device (20) according to Claim 13,
**characterized in that**
• the conveyor belt (1) is formed in modular fashion from a multiplicity of conveyor belt elements (16), which are connected to one other such that they can tilt with respect to one another, and
• the containers (2) are arranged on specific conveyor belt elements (17) of the conveyor belt (1) provided for the fixing of the containers (2)
∘ in one or more rows along the onward movement direction (3) of the conveyor belt (1) and
∘ each with the same longitudinal spacing (14) from one another, measured in the onward movement direction,
• in particular wherein the specific conveyor belt elements (17) respectively
∘ are connected fixedly - specifically adhesively bonded - to the containers (2),
∘ are formed in one piece with the containers (2) or
∘ can be connected detachably to the containers (2) - specifically by means of a latching plug-in connection (18, 19).

15. Cheese production device (20) according to Claim 13 or 14,
**characterized by**
an impulse generator (26), arranged after the turning point (11) in the onward movement direction (3), for the indirect and/or direct transmission of an impulse to the cheese block (13) in such a way that the cheese block (13) falls out of the container (2) located after the turning point (11), even in the event of adhering to the container base (4).

## Revendications

1. Procédé de fabrication de fromage partiellement ou entièrement automatique, en particulier pour fabriquer du fromage frais indéformable lors du réchauffage, qui ne fond pas et qui est donc approprié à être passé à la poêle et grillé, avec une chaîne de fabrication (1) qui se déplace pas à pas selon un rythme défini sur laquelle des récipients (2) sont fixés qui présentent respectivement
• un fond de récipient (4) et des parois latérales (5), cependant que le fond de récipient (4) et les parois latérales (5) sont configurées en étant respectivement perméables au liquide, en particulier en étant pourvues respectivement d'une perforation et
• qui sont placés dans le sens de déplacement (3) de la chaîne de fabrication (1) étant espacés l'un de l'autre de manière définie,
avec les étapes qui sont effectuées respectivement à différents postes de la chaîne de fabrication
• remplissage des récipients (2) avec une masse d'entrée (6) qui est constituée au moins partiellement d'une masse de lait prétraitée et préalablement réchauffée, cependant qu'une quantité de remplissage de la masse d'entrée (6) prédéfinie de manière précise est remplie respectivement par récipient (2) dans les récipients (2) en une seule opération continue de remplissage,
• élimination au moins partiel du petit lait de la masse d'entrée (6) qui se trouve dans les récipients (2) en laissant couler goutte à goutte le liquide de lactosérum (7) à travers les parois latérales perméables au liquide (5) ou les fonds des récipients (4),
• pressage de la masse d'entrée (6) dans lequel le petit lait a été au moins partiellement éliminé, ce après quoi il reste dans les récipients (6) une masse intermédiaire plus homogène (8) par rapport à la masse d'entrée initialement remplie (6),
• refroidissement de la masse intermédiaire (8) qui se trouve dans les récipients (2) en guidant la chaîne de fabrication (1) par endroits par au moins un bain de liquide de refroidissement tempéré de manière définie (9) de telle manière que les récipients (2) qui se trouvent à ce poste de la chaîne de fabrication plongent au moins partiellement dans le liquide de refroidissement (10) et sortent ensuite du bain de liquide de refroidissement (9), cependant que le refroidissement se fait de telle manière qu'une réduction et une stabilisation de forme de la masse intermédiaire est provoquée si bien qu'après refroidissement la masse intermédiaire (8) repose sur le fond du récipient (4), sans pression latérale sur les parois latérales (5), en particulier en se détachant des parois latérales (5),
• retournement des récipients (2) en guidant la chaîne de fabrication (1) autour d'un tournant (11) avec un axe de retournement orienté horizontalement (12) si bien que la masse intermédiaire (8) formée comme un bloc de fromage (13) peut tomber hors des récipients (2) en raison de la force de gravité.

2. Procédé de fabrication de fromage selon la revendication 1, **caractérisé en ce que** le bloc de fromage (13), après être tombé hors du récipient (2), est capté et subits un traitement ultérieur, cependant qu'un refroidissement supplémentaire dans un bain de liquide de refroidissement externe et une découpe du bloc de fromage (13) ont lieu.

3. Procédé de fabrication de fromage selon la revendication 1 ou 2, **caractérisé en ce que** la masse d'entrée (6) est produite par
• traitement préliminaire du lait avec un substitut de présure et/ou des cultures de bactéries pour la coagulation du lait,
• réchauffement du lait, en particulier à une température entre environ 85°C et 92°C et
• précipitation du lait avec de l'acide et/ou du sirop de citron.

4. Procédé de fabrication de fromage selon l'une des revendications précédentes, **caractérisé en ce que**
• les récipients (2)
□ sont fixés à la chaîne de fabrication (1) en une ou plusieurs rangées le long du sens de déplacement (3) de la chaîne de fabrication (1) et
□ respectivement avec le même écart longitudinal (14) l'un par rapport à l'autre mesuré dans le sens de déplacement et
• la chaîne de fabrication 1) est déplacée en cadence pas à pas respectivement exactement de l'écart longitudinal (14) et s'arrête respectivement entre le déplacement pas à pas pendant une fenêtre de temps de repos définie.

5. Procédé de fabrication de fromage selon la revendication 4, **caractérisé en ce que**
• l'écart longitudinal (14) et le tournant (11) de la chaîne de fabrication (1), en particulier un rayon du tournant (11), sont accordés l'un sur l'autre de telle manière que le récipient (2) qui se trouve directement avant le tournant (11) passe tout le tournant (11) dans une seule étape de déplacement de la chaîne de fabrication (1) si bien qu'après l'étape de déplacement une normale de la surface du sol du récipient (4) du récipient (2) qui se trouve directement après le tournant (11) est orientée substantiellement verticalement.

6. Procédé de fabrication de fromage selon l'une des revendications précédentes, **caractérisé en ce que** la chaîne de fabrication (1) formée en particulier en matière plastique et les récipients (2) formés en particulier en matière plastique sont nettoyés à un ou plusieurs postes de la chaîne de fabrication entre l'étape du retournement et l'étape du remplissage des récipients (2).

7. Procédé de fabrication de fromage selon l'une des revendications précédentes, **caractérisé en ce qu'**après le retournement des récipients (2) une impulsion directe et/ou indirecte est donnée sur le bloc de fromage (13) de telle manière que le bloc de fromage (13) tombe hors du récipient (2) qui se trouve après le tournant, même dans le cas d'une adhérence sur le fond du récipient (4).

8. Procédé de fabrication de fromage selon l'une des revendications précédentes, **caractérisé en ce que** la masse d'entrée (6) est remplie dans les récipients (2) en quantités de remplissage prédéfinies précisément en sortant d'un récipient de remplissage (15).

9. Procédé de fabrication de fromage selon l'une des revendications précédentes, **caractérisé en ce que** le pressage se fait en plusieurs intervalles, en particulier en environ dix intervalles avec respectivement une durée d'environ une minute et des pauses de pressage situées respectivement entre eux.

10. Procédé de fabrication de fromage selon l'une des revendications précédentes, **caractérisé en ce que** les récipients (2) ainsi que la chaîne de fabrication (1) subissent un nettoyage préalable avec de l'eau stérilisée par pulvérisation de celle-ci à un poste de la chaîne de fabrication après ou lors de l'étape de l'élimination du petit lait, cependant avant l'étape du refroidissement, si bien qu'une salissure du liquide refroidissement (10) par du liquide de petit lait (7) qui s'égoutte qui adhère à la chaîne de fabrication (1) et/ou aux récipients (2) est évitée.

11. Procédé de fabrication de fromage selon l'une des revendications précédentes, **caractérisé en ce que** le refroidissement se fait en guidant la chaîne de fabrication (1) par deux bains de liquide de refroidissement (9, 9') tempérés différemment qui se suivent séquentiellement dans le sens de déplacement (3), en particulier cependant que la masse intermédiaire (8) séjourne respectivement environ quinze minutes dans chacun des bains de liquide de refroidissement (9, 9').

12. Procédé de fabrication de fromage selon l'une des revendications précédentes, **caractérisé en ce que** de l'eau modifiée avec du sel et de l'acide est utilisée comme eau de refroidissement (10) et une compensation des rapports osmotiques est effectuée entre le liquide de refroidissement (10) et la masse intermédiaire (8).

13. Dispositif de fabrication de fromage partiellement ou entièrement automatique (20), en particulier pour fabriquer du fromage frais indéformable lors du réchauffage, qui ne fond pas et qui est donc approprié à être passé à la poêle et grillé, avec une chaîne de fabrication (1) qui se déplace pas à pas selon un rythme défini sur laquelle des récipients (2) sont fixés qui présentent respectivement
• un fond de récipient (4) et des parois latérales (5), cependant que le fond de récipient (4) et les parois latérales (5) sont configurées en étant respectivement perméables au liquide, en particulier en étant pourvues respectivement d'une perforation et
• qui sont placés dans le sens de déplacement (3) de la chaîne de fabrication (1) étant espacés l'un de l'autre de manière définie,
cependant que le dispositif de fabrication de fromage (20) présente les postes de chaîne de fabrication suivants, en particulier qui se succèdent dans le sens de déplacement (3) :
• un poste de remplissage (21) pour le remplissage des récipients (2) avec une masse d'entrée (2) qui est constituée au moins partiellement d'une masse de lait prétraitée et préalablement réchauffée, cependant qu'une quantité de remplissage de la masse d'entrée (6) prédéfinie de manière précise est remplie respectivement par récipient (2) dans les récipients (2) en une seule opération continue de remplissage,
ce pour quoi les récipients (2) ont des parois latérales aussi hautes que toute la quantité de remplissage prédéfinie de la masse d'entrée (6) peut être contenue par le récipient respectif (2) par récipient (2) en une seule opération de remplissage,
• un poste d'élimination du petit lait (22) pour éliminer au moins partiellement le petit lait de la masse d'entrée (6) qui se trouve dans les récipients (2) en faisant s'écouler goutte à goutte le liquide de petit lait (7) par les parois latérales perméables au liquide ou le fond du récipient (4), en particulier par la perforation,
• une station de pressage (23) pour presser la masse d'entrée (6) dont le petit lait a été au moins partiellement éliminé si bien qu'une masse intermédiaire plus homogène (8) par rapport à la masse d'entrée initialement remplie (6) peut être produite dans les récipients (2),
• un poste de refroidissement (24) pour le refroidissement de la masse intermédiaire (8) qui se trouve dans les récipients (2) en guidant la chaîne de fabrication (1) par endroits par au moins un bain de liquide de refroidissement tempéré de manière définie (9) de telle manière que les récipients (2) qui se trouvent au poste de refroidissement plongent au moins partiellement dans le liquide de refroidissement (10) et sortent ensuite du bain de liquide de refroidissement (9), cependant que le refroidissement se fait de telle manière qu'une réduction et une stabilisation de forme de la masse intermédiaire (8) est provoquée si bien qu'après refroidissement la masse intermédiaire (8) repose sur le fond du récipient (4), sans pression latérale sur les parois latérales (5), en particulier sans contact avec les parois latérales et
• un poste de retournement (25) pour retourner les récipients (2) en guidant la chaîne de fabrication (1) autour d'un tournant (11) avec un axe de retournement orienté horizontalement (12) si bien que la masse intermédiaire (8) formée comme un bloc de fromage (13) peut tomber hors des récipients (2) en raison de la force de gravité.

14. Dispositif de fabrication de fromage (20) selon la revendication 13, **caractérisé en ce que**
• la chaîne de fabrication (1) est formée de manière modulaire par une multitude d'éléments de chaîne de fabrication (16) qui sont reliés l'un à l'autre en étant basculables l'un contre l'autre et
• les récipients (2) sont placés sur des éléments spéciaux de chaîne de fabrication (17) de la chaîne de fabrication (1) prévus pour la fixation des récipients (2)
□ en une ou plusieurs rangées le long du sens de déplacement (3) de la chaîne de fabrication (1) et
□ respectivement avec le même écart longitudinal (14) l'un par rapport à l'autre mesuré dans le sens de déplacement,
• en particulier cependant que les éléments spéciaux de chaîne de fabrication (17) sont
reliés de manière fixe aux récipients (2) - en particulier en étant collés,
□ sont formés en une pièce avec les récipients (2) ou
□ peuvent être reliés de manière amovible aux récipients (2) - en particulier au moyen d'un assemblage encliquetable emboîtable (18, 19).

15. Dispositif de fabrication de fromage (20) selon la revendication 13, **caractérisé par** un générateur d'impulsions (26) placé après le tournant (11) dans le sens de déplacement pour la transmission directe et/ou indirecte d'une impulsion au bloc de fromage (13) de telle manière que le bloc de fromage (13) tombe hors du récipient (2) qui se trouve après le tournant (11), même dans le cas d'une adhérence au fond du récipient (4).
